# EUROPEAN PATENT APPLICATION

(11) **EP 4 503 054 A1**
(43) Date of publication of application: **05.02.2025**
(21) Application number: 23777598.6
(22) Date of filing: 16.01.2023
(51) Int. Cl.: G21B 1/11

(54) **NUCLEAR FUSION METHOD AND DEVICE FOR HYDROGEN-DEUTERIUM-TRITIUM ALLOY REACTOR**

(30) Priority: 31.03.2022 CN 202210328944
(71) Applicant: Dai, Wentao, Shenzhen, Guangdong 518000 (CN)
(72) Inventor: Dai, Wentao, Shenzhen, Guangdong 518000 (CN)
(74) Representative: Herrero & Asociados, S.L.
(86) International application number: PCT/CN2023/072326
(87) International publication number: WO 2023/185219

(57) **Abstract**

A method and a device for nuclear fusion with a hydrogen-deuterium-tritium alloy reactor are provided. The device includes: an ion generator unit configured to generate a high-frequency ion current or a high-frequency electron current; an alloy reactor unit provided with an alloy reactor, where the alloy reactor is configured to store hydrogen, deuterium, and tritium gases to produce a hydrogen-deuterium-tritium alloy reactor and to allow a nuclear fusion reaction; and an energy conversion unit configured to convert energy generated by the nuclear fusion reaction into usable energy. The nuclear fusion method adopts an alloy reactor, and the alloy reactor can allow intensive storage of hydrogen, deuterium, and tritium, and can store 1,125 cubic meter of hydrogen, deuterium, and tritium per cubic meter, which can greatly improve a probability of nucleus-nucleus collision to produce nuclear fusion, thereby making a nuclear fusion reaction easily and stably proceed.

## Description

### CROSS REFERENCE TO THE RELATED APPLICATIONS

This application is a continuation application of International Application No. PCT/CN2023/072326, filed on January 16, 2023, which is based upon and claims priority to Chinese Patent Application No. 202210328944.6, filed on March 31, 2022, the entire contents of which are incorporated herein by reference.

### TECHNICAL FIELD

The present disclosure relates to the technical field of nuclear fusion, and in particular relates to a method and device for nuclear fusion with a hydrogen-deuterium-tritium alloy reactor.

### BACKGROUND

Since James Watt invented the first steam engine in 1769, mankind entered the era of internal combustion engines. Petroleum, as "industrial blood", has supported the rapid development of mankind for more than two hundred years. However, the excessive exploitation and use of fossil fuels causes the following problems: (1) carbon emission levels remain high and the global ecological environment is seriously damaged, and (2) fossil fuel resources are increasingly depleted. Therefore, it is urgent for mankind to promote the replacement of petroleum energy by clean energy.

The controlled nuclear fusion technique has a high energy efficiency ratio (EER), involves the raw materials of hydrogen, deuterium, and tritium that exist in large quantities in nature, and can lead to permanent clean energy for human beings. As a result, the controlled nuclear fusion technique has become an important exploration direction of new energy in countries worldwide.

Currently, the human research on controlled nuclear fusion is conducted mainly by a tokamak device, which mainly has the following disadvantages:
1. The preparation of nuclear fusion material plasma requires a temperature of 100,000,000°C or higher. There is no material that has the capability to store the nuclear fusion material plasma, and the nuclear fusion material plasma must be constrained by a vacuum magnetic field.
2. The temperature of 100,000,000°C or higher needs to be continuously maintained during the plasma nuclear fusion, which is very difficult.
3. The tokamak device is very bulky.
4. A density of the plasma is very low (which is one millionth of a density of air), and thus a density of nuclei is also very low, such that a probability of nucleus-nucleus collision to produce nuclear fusion is very low.
5. The tokamak device currently takes a large power input but generates a small power output, which has low economic benefits.

### SUMMARY

An objective of the present disclosure is to solve the above technical problems and provide a method and device for nuclear fusion with a hydrogen-deuterium-tritium alloy reactor. The nuclear fusion method adopts an alloy reactor, and the alloy reactor can allow intensive storage of hydrogen, deuterium, and tritium, and can store 1,125 cubic meter of hydrogen, deuterium, and tritium per cubic meter, which can greatly improve a probability of nucleus-nucleus collision to produce nuclear fusion, thereby making a nuclear fusion reaction easily and stably proceed.

In the present disclosure, a symbol of protium is P or 1H, a symbol of deuterium is D or 2H, and a symbol of tritium is T or 3H; and 1 MeV = 1,000,000 eV.

To solve the above technical problems, the present disclosure adopts the following technical solutions:
A device for nuclear fusion with a hydrogen-deuterium-tritium alloy reactor is provided, including: an ion generator unit configured to generate a high-frequency ion current or a high-frequency electron current; an alloy reactor unit configured to store hydrogen, deuterium, and tritium gases to produce a hydrogen-deuterium-tritium alloy reactor and to allow a nuclear fusion reaction; and an energy conversion unit configured to convert energy generated by the nuclear fusion reaction into usable energy.

Preferably, the ion generator unit includes a high-frequency ion source, an acceleration tube, a clustering tube, a vacuum valve, a metal target, and a control rod, where the high-frequency ion source includes an ion emission end, and the ion emission end is provided successively with an acceleration tube and a clustering tube; the acceleration tube is provided with a vacuum valve for vacuum-pumping of the acceleration tube; an inner diameter of the clustering tube is less than an inner diameter of the acceleration tube; a high-frequency ion current or a high-frequency electron current generated by the high-frequency ion source is accelerated by the acceleration tube and then clustered by the clustering tube to produce a high-speed particle beam; the metal target is arranged at a rear end of the clustering tube; and the control rod is inserted into the metal target.

Preferably, the alloy reactor unit includes an alloy reactor, a cooling liquid loop, and a heat exchanger, where the alloy reactor is made of a hydrogen storage alloy and an additive; the alloy reactor is provided with a helium exhaust port and a gas feed port, and the gas feed port is configured to add hydrogen, deuterium, and tritium gas raw materials; the alloy reactor stores hydrogen, deuterium, and tritium gases to produce a hydrogen-deuterium-tritium alloy reactor; the cooling liquid loop is provided outside the alloy reactor for cooling and energy collection; and the cooling liquid loop is further provided with a heat exchanger to deliver energy to an energy conversion unit.

The high-frequency ion source is configured to produce a high-frequency ion current or a high-frequency electron current; the high-frequency ion current is accelerated and clustered, and then bombards the metal target to produce a high-energy neutron; the high-frequency electron current is accelerated and clustered, and then bombards the metal target to produce a high-energy gamma ray; and the control rod is configured to control an intensity of a high-energy neutron current or a high-energy gamma ray of the metal target to adjust an intensity of controlled nuclear fusion.

A high-frequency ion current or a high-frequency electron current is generated by the ion generator unit, then accelerated by the acceleration tube, and clustered by the clustering tube. When an accelerated and clustered high-frequency ion current bombards the target metal, a resulting dense neutron current produced by the metal target is injected into the hydrogen-deuterium-tritium alloy reactor, such that hydrogen, deuterium, and tritium nuclei in the hydrogen-deuterium-tritium alloy reactor collide with each other due to close alignment to produce a nuclear fusion reaction. When an accelerated and clustered high-frequency electron current bombards the target metal, a resulting intense high-energy gamma ray is injected into the hydrogen-deuterium-tritium alloy reactor, such that the high-energy gamma ray can accelerate a neutron movement in the hydrogen-deuterium-tritium alloy reactor and thus neutrons collide with hydrogen, deuterium, and tritium nuclei in the hydrogen-deuterium-tritium alloy reactor to produce a nuclear fusion reaction.

Further, the hydrogen storage alloy includes one or more selected from the group consisting of Mg, Ti, Nb, Er, V, and Zr; and the additive includes one or more selected from the group consisting of Cr, Fe, Mn, Co, Ni, and Cu.

Further, a surface of the metal target is provided with a metal protective film; and the control rod is a boron carbide control rod.

Further, the high-frequency ion source is provided with an ion source power supply and a pulse generator, and the pulse generator generates a high-frequency ion current or a high-frequency electron current through a high voltage provided by the ion source power supply.

Further, the high-frequency ion source further includes a high-voltage terminal shell and a voltage-equalizing resistor; the voltage-equalizing resistor is connected in series to a high-voltage circuit of the ion source power supply; and the acceleration tube is further provided with a water-cooled coil for shell cooling.

Further, the energy conversion unit is provided with a steam engine, and the steam engine includes a steam generator; and the energy conversion unit collects heat energy generated by nuclear fusion through the heat exchanger and cools a hydrogen-deuterium-tritium alloy reactor, then converts the collected heat energy into water vapor through the steam generator, and drives the steam engine to generate electricity through the water vapor, such that the heat energy is converted into electric energy.

A method for nuclear fusion with a hydrogen-deuterium-tritium alloy reactor is provided, including the following steps:
(1) taking one or more selected from the group consisting of Mg, Ti, Nb, Er, V, and Zr as a hydrogen storage alloy, and taking one or more selected from the group consisting of Cr, Fe, Mn, Co, Ni, and Cu as an additive; and subjecting the hydrogen storage alloy and the additive to high-temperature melting and thorough mixing to produce an alloy reactor, adding hydrogen, deuterium, and tritium gas raw materials to the alloy reactor through a gas feed port, and storing the hydrogen, deuterium, and tritium gas raw materials by the alloy reactor to produce a hydrogen-deuterium-tritium alloy reactor;
(2) producing a high-frequency ion current or a high-frequency electron current by a high-frequency ion source, accelerating the high-frequency ion current or the high-frequency electron current by an acceleration tube, and clustering the high-frequency ion current or the high-frequency electron current by a clustering tube into a high-speed particle beam to bombard a metal target, where the acceleration tube is provided with a vacuum valve for vacuum-pumping of the acceleration tube, and a control rod is inserted into the metal target; the high-frequency ion current is accelerated and clustered, and then bombards the metal target to produce a high-energy neutron; the high-frequency electron current is accelerated and clustered, and then bombards the metal target to produce a high-energy gamma ray; and the control rod is configured to control an intensity of a high-energy neutron current or a high-energy gamma ray of the metal target;
(3) injecting the dense neutron current produced by the metal target bombarded by the accelerated and clustered high-frequency ion current into the hydrogen-deuterium-tritium alloy reactor in step (1), such that hydrogen, deuterium, and tritium nuclei in the hydrogen-deuterium-tritium alloy reactor collide with each other due to close alignment to produce a nuclear fusion reaction; or injecting the intense high-energy gamma ray produced by the metal target bombarded by the accelerated and clustered high-frequency electron current into the hydrogen-deuterium-tritium alloy reactor in step (1), such that the high-energy gamma ray accelerates a neutron movement in the hydrogen-deuterium-tritium alloy reactor and thus neutrons collide with hydrogen, deuterium, and tritium nuclei in the hydrogen-deuterium-tritium alloy reactor to produce a nuclear fusion reaction, where an intensity of the high-energy neutron current or the high-energy gamma ray of the metal target is controlled by the control rod to adjust an intensity of controlled nuclear fusion;
(4) providing a cooling liquid loop outside the alloy reactor, where the cooling liquid loop is configured for cooling, collecting energy generated by the nuclear fusion reaction, and delivering the energy to an energy conversion unit through a heat exchanger; and
(5) converting the energy generated by the nuclear fusion reaction in step (4) into usable energy by an energy conversion unit.

Further, a reaction equation in the alloy reactor in step (1) is M + xH2 = MHx + xH, where M represents a metal element in the hydrogen storage alloy and the additive and x represents any constant. The nuclear fusion reaction is specifically as follows:
D + D → T + P + 4.04 MeV,
D + D → He3 + n + 3.37 MeV, and
D + He3 → He4 + P + 18.14 MeV.

Further, the control rod in step (1) is a boron carbide control rod.

The method and device for nuclear fusion with a hydrogen-deuterium-tritium alloy reactor provided by the present disclosure have the following beneficial effects:
1. The nuclear fusion method adopts a hydrogen-deuterium-tritium alloy reactor, and the hydrogen-deuterium-tritium alloy reactor can store 1,125 cubic meter of hydrogen, deuterium, and tritium per cubic meter. A density of the hydrogen-deuterium-tritium alloy reactor is 1,125 times a density of pure hydrogen, deuterium, and tritium, and is about 10 billion times a density of plasma, which greatly increases a probability of nucleus-nucleus collision to produce nuclear fusion, thereby improving the probability of a reaction and reducing the difficulty of nuclear fusion.
2. Due to a large number of metal electrons in the hydrogen-deuterium-tritium alloy reactor, hydrogen, deuterium, and tritium nuclei can overcome the Coulomb repulsion and be densely stored, such that the reactor can work stably.
3. A reaction rate can be controlled by the control rod to control a size of energy generated by nuclear fusion, which allows excellent controllability and easy utilization, and makes it possible to put nuclear fusion power generation into commercial use.

### BRIEF DESCRIPTION OF THE DRAWINGS

FIG. 1 is an overall structure diagram of a device for nuclear fusion with a hydrogen-deuterium-tritium alloy reactor provided in the present disclosure;
FIG. 2 is a structure diagram of an ion generator unit in the embodiment shown in FIG. 1; and
FIG. 3 is a structure diagram of an alloy reactor unit and an energy conversion unit in the embodiment shown in FIG. 1.

### DETAILED DESCRIPTION OF THE EMBODIMENTS

The present disclosure is further described below with reference to examples.

### Example 1

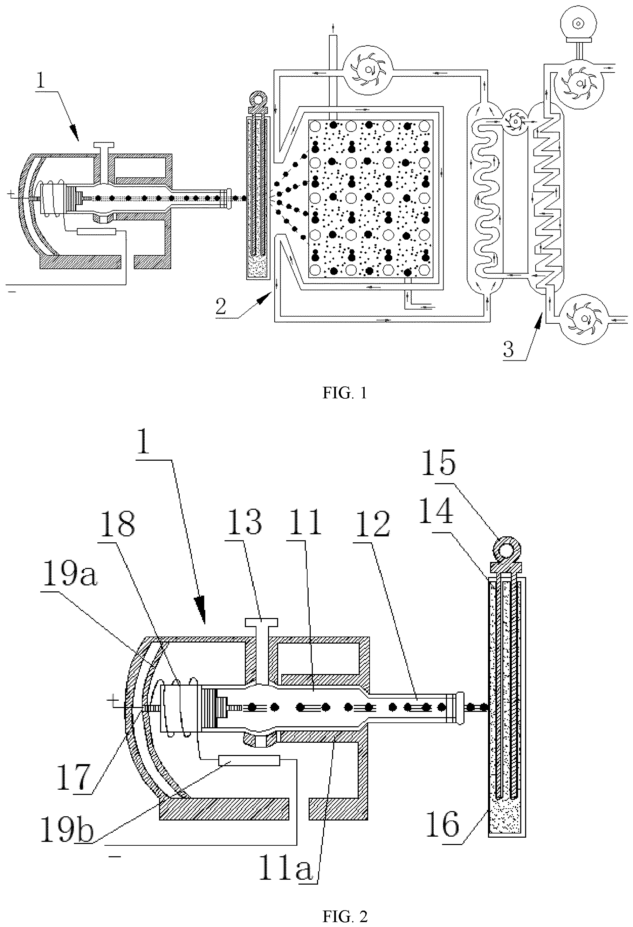

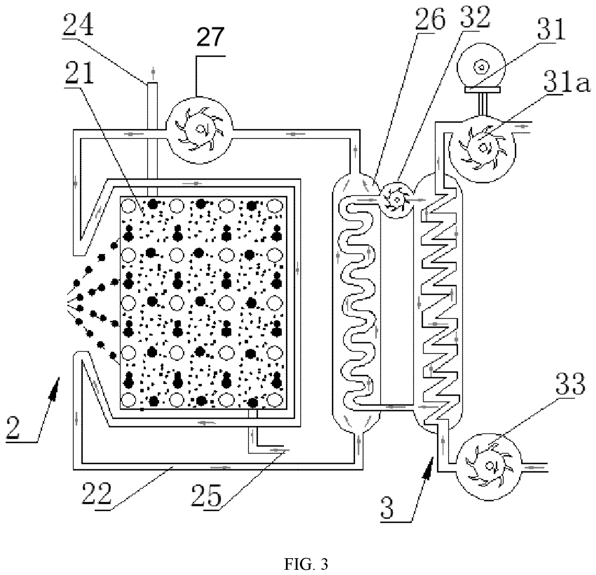

As shown in FIG. 1 to FIG. 3, in FIG. 3, 27 represents a cooling water pump, 32 represents a circulating water pump, and 33 represents a water feeding pump. A device for nuclear fusion with a hydrogen-deuterium-tritium alloy reactor is provided, including: ion generator unit 1 configured to generate a high-frequency ion current or a high-frequency electron current; alloy reactor unit 2 configured to store hydrogen, deuterium, and tritium gases to produce a hydrogen-deuterium-tritium alloy reactor and to allow a nuclear fusion reaction; and energy conversion unit 3 configured to convert energy generated by the nuclear fusion reaction into usable energy.

The ion generator unit 1 includes a high-frequency ion source, acceleration tube 11, clustering tube 12, vacuum valve 13, metal target 14, and control rod 15, where the high-frequency ion source includes an ion emission end, and the ion emission end is provided successively with an acceleration tube and a clustering tube; the acceleration tube is provided with a vacuum valve for vacuum-pumping of the acceleration tube; an inner diameter of the clustering tube is less than an inner diameter of the acceleration tube; a high-frequency ion current or a high-frequency electron current generated by the high-frequency ion source is accelerated by the acceleration tube and then clustered by the clustering tube to produce a high-speed particle beam; the metal target is arranged at a rear end of the clustering tube; and the control rod is inserted into the metal target.

The alloy reactor unit 2 includes alloy reactor 21, cooling liquid loop 22, and heat exchanger 26, where the alloy reactor is made of a hydrogen storage alloy and an additive; the alloy reactor is provided with helium exhaust port 24 and gas feed port 25, and the gas feed port is configured to add hydrogen, deuterium, and tritium gas raw materials; the alloy reactor stores hydrogen, deuterium, and tritium gases to produce a hydrogen-deuterium-tritium alloy reactor; the cooling liquid loop is provided outside the alloy reactor for cooling and energy collection; and the cooling liquid loop is further provided with heat exchanger 26 to deliver energy to an energy conversion unit.

The high-frequency ion source is configured to produce a high-frequency ion current or a high-frequency electron current; the high-frequency ion current is accelerated and clustered, and then bombards the metal target to produce a high-energy neutron, where when an ion energy is 2.8 MeV and a neutron energy is 1.2 MeV, 4.35 * 10^4 neutrons are produced; the high-frequency electron current is accelerated and clustered, and then bombards the metal target to produce a high-energy gamma ray; and the control rod is configured to control an intensity of a high-energy neutron current or a high-energy gamma ray of the metal target to adjust an intensity of controlled nuclear fusion.

A high-frequency ion current or a high-frequency electron current is generated by the ion generator unit, then accelerated by the acceleration tube, and clustered by the clustering tube. When an accelerated and clustered high-frequency ion current bombards the target metal, a resulting dense neutron current produced by the metal target is injected into the hydrogen-deuterium-tritium alloy reactor, such that hydrogen, deuterium, and tritium nuclei in the hydrogen-deuterium-tritium alloy reactor collide with each other due to close alignment to produce a nuclear fusion reaction. When an accelerated and clustered high-frequency electron current bombards the target metal, a resulting intense high-energy gamma ray is injected into the hydrogen-deuterium-tritium alloy reactor, such that the high-energy gamma ray can accelerate a neutron movement in the hydrogen-deuterium-tritium alloy reactor and thus neutrons collide with hydrogen, deuterium, and tritium nuclei in the hydrogen-deuterium-tritium alloy reactor to produce a nuclear fusion reaction.

The hydrogen storage alloy is Zr, and the additive includes Cr and Fe; or the hydrogen storage alloy is Er, there are 5.43 * 10^4 moles of nuclei in one cubic meter of the hydrogen storage alloy, and each mole of metal nuclei can store two moles of hydrogen, deuterium, and tritium gases, that is, one cubic meter of the hydrogen storage alloy can store 1.086 * 10^5 moles of hydrogen, deuterium, and tritium gases, indicating a density nearly ten billion times a density of plasma in a tokamak device.

Further, a surface of the metal target is provided with a metal protective film 16; and the control rod is a boron carbide control rod.

Further, the high-frequency ion source is provided with ion source power supply 17 and pulse generator 18, and the pulse generator generates a high-frequency ion current or a high-frequency electron current through a high voltage provided by the ion source power supply.

Further, the high-frequency ion source further includes high-voltage terminal shell 19a and voltage-equalizing resistor 19b; the voltage-equalizing resistor is connected in series to a high-voltage circuit of the ion source power supply; and the acceleration tube 11 is further provided with water-cooled coil 11a for shell cooling.

Further, the energy conversion unit 3 is provided with steam engine 31, and the steam engine includes steam generator 31a; and the energy conversion unit collects heat energy generated by nuclear fusion through the heat exchanger and cools a hydrogen-deuterium-tritium alloy reactor, then converts the collected heat energy into water vapor through the steam generator, and drives the steam engine to generate electricity through the water vapor, such that the heat energy is converted into electric energy.

Further, a tungsten steel alloy is adopted as a protective shell of the alloy reactor.

Further, the metal target is a lithium target.

A method for nuclear fusion with a hydrogen-deuterium-tritium alloy reactor is provided, including the following steps:
(1) Zr was adopted as a hydrogen storage alloy, and Cr and Fe were adopted as an additive; and the hydrogen storage alloy and the additive were subjected to high-temperature melting and thorough mixing to produce an alloy reactor, hydrogen, deuterium, and tritium gas raw materials were added to the alloy reactor through a gas feed port, and the hydrogen, deuterium, and tritium gas raw materials were stored by the alloy reactor to produce a hydrogen-deuterium-tritium alloy reactor.
(2) A high-frequency ion current or a high-frequency electron current was produced by a high-frequency ion source, accelerated by an acceleration tube, and clustered by a clustering tube into a high-speed particle beam to bombard a metal target, where the acceleration tube was provided with a vacuum valve for vacuum-pumping of the acceleration tube, and a control rod was inserted into the metal target; the high-frequency ion current was accelerated and clustered, and then bombarded the metal target to produce a high-energy neutron; the high-frequency electron current was accelerated and clustered, and then bombarded the metal target to produce a high-energy gamma ray; and the control rod was configured to control an intensity of a high-energy neutron current or a high-energy gamma ray of the metal target.
(3) The dense neutron current produced by the metal target bombarded by the accelerated and clustered high-frequency ion current was injected into the hydrogen-deuterium-tritium alloy reactor in step (1), such that hydrogen, deuterium, and tritium nuclei in the hydrogen-deuterium-tritium alloy reactor collided with each other due to close alignment to produce a nuclear fusion reaction; or the intense high-energy gamma ray produced by the metal target bombarded by the accelerated and clustered high-frequency electron current was injected into the hydrogen-deuterium-tritium alloy reactor in step (1), such that the high-energy gamma ray accelerated a neutron movement in the hydrogen-deuterium-tritium alloy reactor and thus neutrons collided with hydrogen, deuterium, and tritium nuclei in the hydrogen-deuterium-tritium alloy reactor to produce a nuclear fusion reaction, where an intensity of the high-energy neutron current or the high-energy gamma ray of the metal target was controlled by the control rod to adjust an intensity of controlled nuclear fusion.
(4) A cooling liquid loop was provided outside the alloy reactor, where the cooling liquid loop was configured for cooling, collecting energy generated by the nuclear fusion reaction, and delivering the energy to an energy conversion unit through a heat exchanger.
(5) The energy generated by the nuclear fusion reaction in step (4) was converted into usable energy by an energy conversion unit.

Further, a reaction equation in the alloy reactor in step (1) was M + xH2 = MHx + xH, where M represents a metal element in the hydrogen storage alloy and the additive and x represents any constant. A deuterium gas was added to the alloy reactor. The nuclear fusion reaction was specifically as follows:
D + D → T + P + 4.04 MeV,
D + D → He3 + n + 3.37 MeV, and
D + He3 → He4 + P + 18.14 MeV.

Further, the control rod in step (1) was a boron carbide control rod.

Further, the hydrogen storage alloy and the additive in step (1) may be adopted in any ratio, and the hydrogen, deuterium, and tritium gases may be added to the alloy reactor in any mass ratio.

### Example 2

Technical features of this example are the same as Example 1, except that the hydrogen storage alloy is Mg and Ti and the additive includes Fe.

The present disclosure is described in detail above. The above are merely preferred examples of the present disclosure, and do not limit the implementation scope of the present disclosure, that is, any addition, subtraction, or replacement of a general technical means made within the scope of the present application shall fall within the scope of the present disclosure.

## Claims

1. A device for a nuclear fusion with a hydrogen-deuterium-tritium alloy reactor, comprising:
an ion generator unit configured to generate a high-frequency ion current or a high-frequency electron current; an alloy reactor unit configured to store hydrogen, deuterium, and tritium gases to produce the hydrogen-deuterium-tritium alloy reactor and to allow a nuclear fusion reaction; and an energy conversion unit configured to convert an energy generated by the nuclear fusion reaction into a usable energy,
wherein the ion generator unit comprises a high-frequency ion source, an acceleration tube, a clustering tube, a vacuum valve, a metal target, and a control rod, wherein the high-frequency ion source comprises an ion emission end, and the ion emission end is provided successively with the acceleration tube and the clustering tube; the acceleration tube is provided with the vacuum valve for vacuum-pumping of the acceleration tube; an inner diameter of the clustering tube is less than an inner diameter of the acceleration tube; the high-frequency ion current or the high-frequency electron current generated by the high-frequency ion source is accelerated by the acceleration tube and then clustered by the clustering tube to produce a high-speed particle beam; the metal target is arranged at a rear end of the clustering tube; and the control rod is inserted into the metal target; and
the alloy reactor unit comprises an alloy reactor, a cooling liquid loop, and a heat exchanger, wherein the alloy reactor is made of a hydrogen storage alloy and an additive; the alloy reactor is provided with a helium exhaust port and a gas feed port, and the gas feed port is configured to add hydrogen, deuterium, and tritium gas raw materials; the alloy reactor stores the hydrogen, deuterium, and tritium gases to produce the hydrogen-deuterium-tritium alloy reactor; the cooling liquid loop is provided outside the alloy reactor for cooling and an energy collection; and the cooling liquid loop is further provided with the heat exchanger to deliver the energy to the energy conversion unit.

2. The device for the nuclear fusion with the hydrogen-deuterium-tritium alloy reactor according to claim 1, wherein the hydrogen storage alloy comprises one or more selected from the group consisting of Mg, Ti, Nb, Er, V, and Zr; and the additive comprises one or more selected from the group consisting of Cr, Fe, Mn, Co, Ni, and Cu.

3. The device for the nuclear fusion with the hydrogen-deuterium-tritium alloy reactor according to claim 1, wherein a surface of the metal target is provided with a metal protective film; and the control rod is a boron carbide control rod.

4. The device for the nuclear fusion with the hydrogen-deuterium-tritium alloy reactor according to claim 1, wherein the high-frequency ion source is provided with an ion source power supply and a pulse generator, and the pulse generator generates the high-frequency ion current or the high-frequency electron current through a high voltage provided by the ion source power supply.

5. The device for the nuclear fusion with the hydrogen-deuterium-tritium alloy reactor according to claim 4, wherein the high-frequency ion source further comprises a high-voltage terminal shell and a voltage-equalizing resistor; the voltage-equalizing resistor is connected in series to a high-voltage circuit of the ion source power supply; and the acceleration tube is further provided with a water-cooled coil for shell cooling.

6. The device for the nuclear fusion with the hydrogen-deuterium-tritium alloy reactor according to claim 1, wherein the energy conversion unit is provided with a steam engine, and the steam engine comprises a steam generator; and the energy conversion unit collects a heat energy generated by the nuclear fusion through the heat exchanger and cools the hydrogen-deuterium-tritium alloy reactor, then converts the heat energy into a water vapor through the steam generator, and drives the steam engine to generate an electricity through the water vapor, such that the heat energy is converted into an electric energy.

7. A method for a nuclear fusion with a hydrogen-deuterium-tritium alloy reactor, comprising the following steps:
(1) taking one or more selected from the group consisting of Mg, Ti, Nb, Er, V, and Zr as a hydrogen storage alloy, and taking one or more selected from the group consisting of Cr, Fe, Mn, Co, Ni, and Cu as an additive; and subjecting the hydrogen storage alloy and the additive to a high-temperature melting and a thorough mixing to produce an alloy reactor, adding hydrogen, deuterium, and tritium gas raw materials to the alloy reactor through a gas feed port, and storing the hydrogen, deuterium, and tritium gas raw materials by the alloy reactor to produce the hydrogen-deuterium-tritium alloy reactor;
(2) producing a high-frequency ion current or a high-frequency electron current by a high-frequency ion source, accelerating the high-frequency ion current or the high-frequency electron current by an acceleration tube, and clustering the high-frequency ion current or the high-frequency electron current by a clustering tube into a high-speed particle beam to bombard a metal target, wherein the acceleration tube is provided with a vacuum valve for vacuum-pumping of the acceleration tube, and a control rod is inserted into the metal target; the high-frequency ion current is accelerated and clustered, and then bombards the metal target to produce a high-energy neutron current; the high-frequency electron current is accelerated and clustered, and then bombards the metal target to produce a high-energy gamma ray; and the control rod is configured to control an intensity of the high-energy neutron current or the high-energy gamma ray of the metal target;
(3) injecting a dense neutron current produced by the metal target bombarded by an accelerated and clustered high-frequency ion current into the hydrogen-deuterium-tritium alloy reactor in step (1), such that hydrogen, deuterium, and tritium nuclei in the hydrogen-deuterium-tritium alloy reactor collide with each other due to a close alignment to produce a nuclear fusion reaction; or injecting an intense high-energy gamma ray produced by the metal target bombarded by an accelerated and clustered high-frequency electron current into the hydrogen-deuterium-tritium alloy reactor in step (1), such that the high-energy gamma ray accelerates a neutron movement in the hydrogen-deuterium-tritium alloy reactor and thus neutrons collide with hydrogen, deuterium, and tritium nuclei in the hydrogen-deuterium-tritium alloy reactor to produce a nuclear fusion reaction, wherein an intensity of the high-energy neutron current or the high-energy gamma ray of the metal target is controlled by the control rod to adjust an intensity of a controlled nuclear fusion;
(4) providing a cooling liquid loop outside the alloy reactor, wherein the cooling liquid loop is configured for cooling, collecting an energy generated by the nuclear fusion reaction, and delivering the energy to an energy conversion unit through a heat exchanger ; and
(5) converting the energy generated by the nuclear fusion reaction in step (4) into a usable energy by the energy conversion unit.

8. The device for the nuclear fusion with the hydrogen-deuterium-tritium alloy reactor according to claim 7, wherein an reaction equation in the nuclear fusion reaction of the hydrogen, deuterium, and tritium nuclei in step (3) is M + xH2 = MHx + xH, wherein M represents a metal element in the hydrogen storage alloy and the additive and x represents any constant.

9. The device for the nuclear fusion with the hydrogen-deuterium-tritium alloy reactor according to claim 8, wherein the nuclear fusion reaction is specifically as follows:
D + D → T + P + 4.04 MeV,
D + D → He3 + n + 3.37 MeV, and
D + He3 → He4 + P + 18.14 MeV.

10. The device for the nuclear fusion with the hydrogen-deuterium-tritium alloy reactor according to claim 7, wherein the control rod in step (2) is a boron carbide control rod.
